Europäisches Patentamt

European Patent Office

Office européen des brevets

(11) Veröffentlichungsnummer: **0 343 442**
**A2**

(12) **EUROPÄISCHE PATENTANMELDUNG**

(21) Anmeldenummer: 89108534.2

(22) Anmeldetag: 12.05.89

(51) Int. Cl.⁴: **C08L 101/00 , C08L 77/00 ,**
**C08L 67/02 , //(C08L77/00,**
**81:04,51:04),(C08L67/02,81:04)**

(30) Priorität: 25.05.88 DE 3817624

(43) Veröffentlichungstag der Anmeldung:
**29.11.89 Patentblatt 89/48**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Westeppe, Uwe, Dr.**
**Yorckstrasse 19**
**D-5630 Remscheid 11(DE)**
Erfinder: **Joswig, Thomas, Dr.**
**Am Alsbach 11**
**D-4060 Viersen(DE)**
Erfinder: **Kirsch, Jürgen, Dr.**
**Hahnenweg 1**
**D-5000 Köln 80(DE)**
Erfinder: **Bushong, William, Dr.**
**Bodelschwinghstrasse 14**
**D-4150 Krefeld(DE)**

(54) **Mischungen, hergestellt aus metastabil amorphen, teilkristallinen Thermoplasten.**

(57) Die Erfindung betrifft Mischungen aus thermoplastisch verarbeitbaren Kunststoffen, die unter Verwendung von mindestens einem metastabil amorphen, teilkristallinen Kunststoff hergestellt werden.

EP 0 343 442 A2

## Mischungen, hergestellt aus metastabil amorphen, teilkristallinen Thermoplasten

Die Erfindung betrifft Mischungen aus thermoplastisch verarbeitbaren Kunststoffen, die unter Verwendung von mindestens einem metastabil amorphen, teilkristallinen Kunststoff hergestellt werden.

Thermoplastblends sind in den letzten Jahren intensiv bearbeitet worden. Die entwickelten Produkte weisen oft ein eigenständiges Eigenschaftsprofil im Vergleich zu den Blendpartnern auf.

Die Herstellung von Thermoplastblends erfolgt üblicherweise durch Homogenisierung der Einzelkomponenten in der Schmelze. Einige Thermoplastblends sind bis heute auf diesem Wege jedoch nicht zugänglich, da die Differenz der Verarbeitungstemperaturen zu groß ist und somit eine gemeinsame Compoundierung nur unter Schädigung eines oder mehrerer Blendpartner möglich ist. Bei einer solchen Verfahrensweise kann durch die thermischen und/oder oxidativen Schädigungen des einen Blendpartners auch das Gesamteigenschaftsprofil des resultierenden Blends negativ beeinflußt werden.

Aufgabe der vorliegenden Erfindung war es, ein Verfahren zur Herstellung von Polymerblends zu entwickeln, das eine Schädigung der Blendpartner weitgehend vermeidet.

Es wurde nun gefunden, daß Mischungen (Polymerblends) aus teilkristallinen Thermoplasten (A) und anderen (teilkristallinen oder amorphen) Thermoplasten (B) ohne Schädigung eines Blendpartners hergestellt werden können, wenn der teilkristalline Thermoplast (A) in metastabil amorpher Form vorliegt.

Die resultierenden Blends weisen makroskopisch bessere Oberflächen (z.B. glatter Strang) auf. Die Verteilung der Partner in der Matrixphase ist wesentlich verfeinert, was zu besseren mechanischen Eigenschaften (z.B. Zähigkeit) führen kann.

Gegenstand der Erfindung sind Polymerblends aus

A) einem teilkristallinen Thermoplasten A, der in metastabil amorpher Form eingesetzt wird,

B) mindestens einem zweiten Thermoplasten B und

C) gegebenenfalls weiteren Zusatzstoffen.

Die teilkristallinen Thermoplaste A im Sinne der Erfindung kristallisieren beim Abkühlen der Schmelze mit einer Kühlrate <1 °C/min nur teilweise. Sie zeigen Schmelzenthalpien von 5 bis 130 J/g, bevorzugt 10 bis 100 J/g. Die Schmelzenthalpien der teilkristallinen Thermoplaste können z.B. nach bekannten Verfahren der Differentialthermoanalyse bestimmt werden, (z.B. Vieweg/Braun, Kunststoff-Handbuch, Band I, Seite 591 ff, Carl Hanser Verlage, München 1975).

Als Beispiele teilkristalliner Thermoplaste für Komponente A seien genannt: Polyarylensulfide (z.B. Polyphenylensulfid), Polysulfone, Polyester, Polyamide, Polyacetale, Poly-paraxylylene, Polyetherketone, Polyether-etherketone, (Co-)Polymere von Olefinen wie Ethylen, Propylen, Buten-1, 3-Methylbuten-1, 4-Methyl-penten-1, sowie Copolymere mit Fluor und/oder Chlorolefinen.

Der Anteil der Komponente A am Gesamtblend kann 0,9 -99,1 Gew.-% betragen, vorzugsweise 5 bis 50 Gew.-%, bezogen auf die Summe des Gewichts der Komponenten A + B.

Als zweite Blendkomponente B können amorphe und/oder teilkristalline Thermoplaste eingesetzt werden, z.B. die unter A genannten Polymeren, weiterhin Polycarbonate, Polyisobutylene, Polyphenylenoxid usw.. Der Anteil der Komponente B kann 0,9 bis 99,1 Gew.-%, bevorzugt 50 bis 90 Gew.-%, bezogen auf die Summe der Komponenten A + B, betragen.

Zur Herstellung der erfindungsgemäßen Thermoplastblends ist mindestens einer der teilkristallinen Thermoplaste im metastabil amorphen Zustand einzusetzen. Die Kristallinität von Polymeren ist der Prozentsatz des kristallinen Anteils in der Gesamtmasse (K. Stoeckert, Kunststofflexikon 7.

Auflage S. 46 Hanser Verlag). Die erfindungsgemäß eingesetzten teilkristallinen metastabil amorphen Thermoplaste der Komponente A weisen eine niedrigere Kristallinität auf als auf üblichem Wege hergestellte Proben dieser Thermoplasten. Dies kann z.B. durch schnelle Abkühlung der Schmelze des teilkristallinen Thermoplasten, z.B. mit flüssigem Stickstoff, Trockeneis oder Abkühlung unter definierten Bedingungen erreicht werden.

Die Komponente A kann, bedingt durch die geringere Kristallinität, bei tieferen Temperaturen als überlicherweise verarbeitet werden. Die teilkristallinen Thermoplaste A sind zu 60 bis 100 % amorph und liegen somit nicht im thermodynamischen im Gleichgewichtszustand vor. Dieser Zustand des Materials wird in der vorliegenden Erfindung als metastabil amorph bezeichnet. Bevorzugte teilkristalline Thermoplasten (A) sind solche mit einer Kristallit- Schmelztemperatur von 200 bis 450 °C, vorzugsweise 220 bis 400 °C.

Die Verarbeitungstemperatur zur Herstellung der erfindungsgemäßen Mischungen kann wesentlich kleiner sein als die Temperatur, die sonst für das Mischen der entsprechenden teilkristalliner Thermoplasten notwendig ist (Aufschmelzen der Kristallite).

Die erfindungsgemäßen Polymerblends weisen bessere Eigenschaften auf. So ist die Oberfläche glatter, oft wird auch eine Farbverbesserung erzielt. Auch mechani sche und/- oder andere technisch relevante Eigenschaften können verbessert werden.

Polymerblends sind erfindungsgemäß zugänglich, insbesondere auch dann, wenn der zu hohe Schmelzpunkt des teilkristallinen Thermoplasten (A) eine Herstellung des Polymerblends kaum möglich macht, da sich z.B. der zweite Thermoplast (B) bei diesen Temperaturen zersetzen kann.

Bevorzugte Polymerblends enthalten

A) 5 bis 50 Gew.-% eines teilkristallinen Thermoplasten A, der in metastabil amorpher Form eingesetzt wird,

B) 50 bis 95 Gew.-% eines weiteren Thermoplasten B und, bezogen auf das Gewicht der Summe der Komponenten A + B,

C) 0 bis 50 Gew.-% weitere Zusatzstoffe, bezogen auf das Gewicht der Summe A + B.

Vorzugsweise werden erfindungsgemäß als Komponente A Polyarylensulfide, besonders bevorzugt Polyphenylensulfid, eingesetzt. Polyarylensulfide und ihre Herstellung, z.B. aus Dihalogenaromaten und Schwefelspendern, sind bekannt (z.B. US-PS 3 354 129, EP-OS 171 021).

Erfindungsgemäß liegen die Thermoplaste der Komponente A überwiegend in einem metastabilen amorphen Zustand vor. So kann der Thermoplast A, z.B. ein Polyphenylensulfid, durch Aufschmelzen und anschließendes rasches Abkühlen (z.B. innerhalb von 1 sec. bis 5 min. z.B. mit Eiswasser, Eiswasser/Kochsalz, Trockeneis, flüssigen Gasen, z.B. Luft, Stickstoff, Edelgase oder schnelles Abziehen des dünnen Stranges durch ein Wasserbad) in einen metastabilen amorphen Zustand gebracht werden.

Als thermoplastische Komponente B können erfindungsgemäß z.B. bekannte teilkristalline Polyamide, insbesondere Polyamid-6, Polyamid 6,6 und teilkristalline Copolyamide auf Basis dieser beiden Komponenten eingesetzt werden. Weiterhin kommen teilkristalline Polyamide in Betracht, deren Säurekomponente ganz oder teilweise (neben z.B. Adipinsäure, Caprolactam) aus Terephthalsäure und/oder Isophthalsäure und/oder Korksäure und/oder Sebacinsäure und/oder Azelainsäure und/oder Adipinsäure und/oder einer Cyclohexandicarbonsäure besteht, und deren Diaminkomponente ganz oder teilweise, insbesondere aus m- und/oder p-Xylylendiamin und/oder Hexamethylendiamin und/oder 2,2,4 und/oder 2,4,4-Trimethylhexamethylendiamin und/oder Isophorondiamin besteht. Weiterhin sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide für die Komponente B sind Polyamid-6 und Polyamid-6,6 oder Copolyamide mit nur geringen Anteilen (bis etwa 10 Gew.-%) der Cokomponenten.

Es können auch als Polyamide für die Komponente B) amorphe Polyamide eingesetzt werden. Sie werden z.B. erhalten durch Polykondensation von Diaminen, beispielsweise Ethylendiamin, Hexamethylendiamin, Decamethylen diamin, 2,2,4- und/oder 2,4,4-Trimethylhexamethylendiamin, m- und/oder p-Xylylendiamin, Bis-(4-aminocyclohexyl)-methan, oder Gemischen aus 4,4'-, 2,4'- oder 2,2'-Diaminodicyclohexylmethanen, 2,2-Bis-(4-aminocyclo hexyl)-propan, 3,3'-Dimethyl-4,4'-diamino-dicylcohexylmethan, 3-Aminoethyl-3,5,5-trimethyl-cyclohexylamin, 2,5- und/oder 2,6-Bis-(aminomethyl)-norbonan und/oder 1,4-Dimaino-methylcyclohexan mit Dicarbonsäuren, beispielsweise Oxalsäure, Adipinsäure, Azelainsäure, Decandicarbonsäure, Heptadecandicarbonsäure, 2,2,4-und/oder 2,4,4-Trimethyladipinsäure, Isophthalsäure oder geringen Mengen an Terephthalsäure usw..

Es sind auch amorphe Copolymere, die durch Polykondensation mehrerer Monomerer erhalten werden, geeignet, z.B. Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide können z.B. hergestellt werden aus Isophthalsäure, Hexamethylendiamin und weiteren Diaminen wie 4,4'-Diaminodicyclohexylmethan, Isophorondiamin, 2,2,4-und/oder 2,4,4-Trimethylhexamethylendiamin, 2,5-und/oder 2,6-Bis (aminomethyl)-norbornan; oder aus Isophthalsäure, 4,4'-Diamino-dicylcohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4-und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen z.B. aus

| 70 | bis | 99 | Mol-% des 4,4'-Diamonoisomeren |
|----|-----|----|--------------------------------|
| 1  | bis | 30 | Mol-% des 2,4'-Diaminoisomeren |
| 0  | bis | 2  | Mol-% des 2,2'-Diaminoisomeren und |

gegebenenfalls entsprechend höher kondensierten Diaminen, die durch Hydrierung von Diamonodiphenylmethan technischer Qualität erhalten werden. Die Isophthalsäure kann bis zu 30 % durch Terephthalsäure ersetzt sein.

Als thermoplastische Komponente B können erfindungsgemäß z.B. thermoplastische Polyester wie Reaktionsprodukte aus aromatischen bzw. aliphatischen Dicarbonsäuren oder ihren reaktionsfähigen Derivaten (z. B. Dialkylestern wie Dimethylestern oder Anhydriden) und aliphatischen, cycloaliphatischen, araliphatischen oder aromatischen Diolen eingesetzt werden.

Bevorzugte Polyester für die Komponente B lassen sich aus Terephthalsäure (oder ihren reaktionfähigen Derivaten) und Alkandiolen mit 2 bis 10 C-Atomen nach bekannten Methoden herstellen (z.B. Kunststoffhandbuch, Bd. VIII, S. 695 ff, Carl Hanser Verlag, München 1973).

Bevorzugte Polyalkylenterephthalate als Polyester für Komponente B enthalten mindestens 80 Mol.-%, vorzugsweise mindestens 90 Mol-%, bezogen auf die Dicarbonsäure komponente, Terephthalsäurereste und mindenstens 80 Mol-%, vorzugsweise mindestens 90 Mol-%, bezogen auf die Diolkomponente, Ethylenglykol- und-/oder Butandiol-1,4- reste.

Bevorzugte Polyalkylenterephthalate als Polyester für die Komponente B können neben Terephthalsäureresten bis zu 20 Mol-% Reste anderer aromatischer oder cycloaliphatischer Dicarbonsäuren mit 8 bis 14 C-Atomen und/oder aliphatischer Dicarbonsäuren mit 4 bis 12 C-Atomen enthalten, z. B. Reste von Phthalsäure, Isophthalsäure, Naphthalin-2,6-dicarbonsäure, Diphenyl-4,4'-Diphenyl-4,4'-dicarbonsäure, Bernstein-, Adipin-, Sebacinsäure, Cyclohexandiessigsäure. Sie können neben Ethylenglykol-bzw. Butandiol-1,4-resten bis zu 20 Mol-% anderer aliphatischer Diole mit 3 bis 21 C-Atomen oder cycloaliphatischer Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Methylpentandiol-2,4, 2-Methylpentandiol-2,4, 2,2,4-Trimethylpentandiol-1,3 und -1,5, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)-propan, 2,4-Dihydroxy-1,1,3,3, tetramethyl-cyclobutan, 2,2-Bis(3-ß-hydroxyethoxyphenyl)--propan und 2,2-Bis-(4-hydroxypropoxyphenyl)- propan. Diese sind bekannt, z.B. DE-OS 24 07 674, 24 07 776, 27 15 932 oder können nach bekannten Verfahren analog hergestellt werden.

Die Polyalkylenterephthalate als Polyester für die Komponente B können durch Einbau relativ kleiner Mengen 3- oder 4-wertiger Alkohole oder 3- oder 4-basischer Carbonsäuren (z.B. DE-OS 19 00 270, US-PS 36 92 744) verzweigt werden. Beispiele bevorzugter Verzweigungsmittel sind Trimesinsäure, Trimellithsäure, Trimethylolethan und -propan und Pentaerythrit. Es werden 0 bis 1 Mol-% des Verzweigungsmittels, bezogen auf die Säurekomponente, eingesetzt.

Besonders bevorzugt sind Polyalkylenterephthalate als Polyester für die Komponente B, die aus Terephthalsäure oder deren reaktionsfähigen Derivaten (z.B. deren Dialkylestern) und Ethylenglykol oder Butandiol-1,4, hergestellt worden sind.

Die als Komponente B vorzugsweise verwendeten Polyethylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g.

Die als Komponente B verwendeten Polybutylenterephthalate besitzen im allgemeinen eine Intrinsic-Viskosität von 0,7 bis 1,6 dl/g, vorzugsweise 0,8 bis 1,5 dl/g, insbesondere 0,8 bis 1,30 dl/g jeweils gemessen in Phenol/o-Dichlorbenzol (1:1 Gewichtsteile) bei 25°C.

Es können auch Mischungen verschiedener Polyester als Komponente B, z.B. Polyethylenterephthalat/Polybutylenterephthalat-Mischungen eingesetzt werden. Vorzugsweise werden Polyethylenterephthalate mit einer Intrinsic-Viskosität von 0,65 bis 0,9 dl/g und Polybutylenterephthalate mit einer Intrinsic-Viskosität von 0,8 bis 1,4 dl/g und Polyethylenterephthalat/Polybutylenterephthalat im Verhältnis von 90:10 bis 10:90 (bezogen auf Gewicht) abgemischt.

Anstelle von Polyestermischungen lassen sich auch entsprechende Copolyester einsetzen.

Als weitere Zusatzstoffe C können übliche Verarbeitungshilfsmittel, Entformungsmittel, Verstärkungsmittel, Glasfasern, Graphit, Pigmente, Harze, Kautschuke usw. zugegeben werden.

Gegebenenfalls als weitere Komponente können die erfindungsgemäßen Formmassen als Komponente C) ein die Schlagzähigkeit der Formmassen erhöhendes Kautschukpolymerisat enthalten. Eine Mitverwendung der Komponente C) ist insbesondere dann vorteilhaft, wenn die Formmassen eine gute Tieftemperaturzähigkeit aufweisen sollen. Bevorzugte Formmassen enthalten bis zu 50, z.B. 1 bis 35, insbesondere 10 bis 35 Gew.-% der Komponente C), bezogen auf die Summe A) + B) + C). Die Komponente C) stellt ein Kautschukpolymerisat dar und enthält oder ist ein Kautschukpolymerisat mit Einfriertemperaturen (Glastemperaturen) kleiner 0°C, insbesondere kleiner -20°C. Es kann aus der Reihe der Homo-, Co-oder Pfropfpolymerisate auf der Basis von Dienmonomer-, Olefin- oder Acrylatkautschuken ausgewählt werden, die unvernetzt, insbesondere teilvernetzt oder hochvernetzt sein können. Die Komponente C) ist aus den an sich bekannten Kautschukpolymerisaten auszuwählen, die zur Verbesserung der Eigenschaften, insbesondere zur Schlagzähverbesserung von thermoplastischen Polyamiden üblicherweise verwendet werden.

Typische Vertreter dieser Klasse sind z.B: Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Acrylnitril/Copolymerkautschuke, Dienpolymer/Vinylarylpolymer-Blockpolymere wie Styrol/Butadien-Blockcopolymere.

Die Herstellung der erfindungsgemäßen Abmischungen erfolgt auf üblichen Extrudern, z.B. (Doppel) Schneckenwellenextrudern usw.

Die erfindungsgemäßen Formmassen können zu Formteilen, Halbzeugen, Fasern und Folien verarbeitet werden.

Beispiele:

Herstellung und Prüfung der Formmassen

Auf einem kontinuierlich arbeitenden Doppelwellenextruder wurde die Polyamidkomponente und das Polyphenylensulfid aufgeschmolzen und zu deren Schmelze gegebenenfalls der Kautschuk C zudosiert. Die Zylindertemperaturen wurden so gewählt, daß die in der Tabelle angegebenen Massetemperaturen eingehalten wurden. Der Schmelzestrang wurde in Wasser abgeleitet, granuliert und getrocknet.

Von den Formmassen wurden auf einer üblichen Spritzgußmaschine 80 x 10 x 4 mm Prüfstäbe hergestellt. Geprüft wurden der Biege-E-Modul (DIN 53457) sowie die Schlagzähigkeit bzw. Kerbschlagzähigkeit nach Izod (ISO 180) bei verschiedenen Temperaturen und daraus der Zäh/Spröd-Übergang ermittelt.

Mischungen aus metastabil amorphem PPS und Polyamid

A Polyamid 6 (handelsüblich) mit einer rel. Viskosität (gemessen an einer 1 Gew.-%igen Lösung in m-Kresol bei 25°C) von 3,0

B Polyphenylensulfid, z.B. hergestellt nach EP-OS 171 021 und in einen metastabil amorphen Zustand überführt:

In einem 5 l-Reaktionskessel, der mit einem Thermometer, Rührer, kühlbarer Kolonne, Destillatteiler, Rückflußkühler und zwei Tropftrichtern ausgerüstet ist, werden unter Stickstoff 2693,0 g N-Methylcaprolactam und 608,7 g 1,4-Dichlorbenzol vorgelegt und zum Rückfluß erhitzt. Dazu wird eine Lösung von 1147,5 g Natriumsulfid-Hydrat, 4,4 g Natriumhydroxid und 141,1 g Caprolactam so zugetropft, daß das zugeführte Wasser gleichzeitig azeotrop mit 1,4-Dichlorbenzol abdestillieren kann. Gleichzeitig werden weitere 608,7 g 1,4-Dichlorbenzol zur Reaktionsmischung kontinuierlich zudosiert. Zur Erhaltung der Stöchiometrie wird abdestilliertes 1,4-Dichlorbenzol nach Abtrennung des Wassers wieder in den Ansatz zurückgeführt. Nach beendeter Zugabe und Entwässerung wird die Kolonne auf Rückfluß gestellt, der Ansatz weitere 10 h zum Rückfluß erhitzt und das Produkt anschließend in üblicher Weise isoliert.

Das Polyphenylensulfid wird in einem üblichen Extruder bei 280 bis 350°C aufgeschmolzen und durch rasches Abkühlen (Wasserbad) in den metastabil amorphen Zustand überführt. Ein Teil des Materials wurde durch Tempern bei 150°C (4 h) in den teilkristallinen Zustand überführt.

Pfropfkautschuk, hergestellt nach dem Verfahren der Emulsionspolymerisation, z.B. gemäß den Angaben in der DE-OS 3 105 364 durch Aufpfropfen von 18 Gew.-Teilen Methylmethacrylat und 2 Gew.-Teile t-Butylacrylat auf 80 Gew.-Teilen eines grobteiligen Kautschuks mit einem mittleren Teilchendurchmesser der in Latexform vorliegenden Butadienpfropfgrundlage von 0,4 µm und einem Gelgehalt von 86 Gew.-%

Tabelle 1:

| Beispiel | Komponenten | | | Eigenschaften | | |
|---|---|---|---|---|---|---|
| | A | B | C | Schlagzähigkeit (kJ/m²) | Biege-E-Modul (MPa) | KSZ (kJ/m²) |
| 1 | 70 | 30 | 0 | 22,0 | | 6,8 |
| 1* | 70 | 30 | 0 | 20,2 | | 6,0 |
| 2 | 50 | 20 | 30 | n.g.** | *1550 | 62,2 (RT) |
| | | | | | | 57,7 (+10) |
| | | | | | | 46,2 (0°) |
| | Zäh/Spröd-Übergang 0/-10°C | | | | - | 25,9 (-10) |
| | | | | | | 19,4 (-20) |
| 2* | 50 | 20 | 30 | n.g.** | 1500 | 57,4 (RT) |
| | | | | | | 51,1 (+10) |
| | | | | | | 21,8 (0°) |
| | Zäh/Spröd-Übergang +10/0°C | | | | | 18,6 (-10) |
| | | | | | | 16,9 (-20) |

\* Vergleichsversuche mit teilkristallinem Polyphenylensulfid
\*\* nicht gebrochen

Die Versuche zeigen, daß bei Verwendung von metastabil amorphem Polyphenylensulfid, insbesondere in Gegenwart eines Kautschuks, deutlich verbesserte Zähigkeiten realisiert werden können. Die Formmassen der erfindungsgemäßen Versuche 1 und 2 weisen im Gegensatz zu den Vergleichsversuchen glatte Oberflächen auf (Tabelle 1)..

Mischungen aus metastabil amorphem PPS und Polyestern

1. Polybutylenterephthalat PBT mit einer Intrinsic-Viskosität von 1,20 dl/g, gemessen in Phenol/o-Dichlorbenzol-Gemisch (Gew.-Verhältnis 1:1; 25°C, Ubbelohde-Viskosimeter).
2. Polyethylenterephthalat PET mit einer Intrinsic-Viskosität von 0,80 dl/g, bestimmt wie unter 1. beschrieben.
3. Polyphenylensulfid mit einer Schmelzviskosität von 186 Pa·s.

Herstellung und Prüfung der Formmassen

Auf einem kontinuierlich arbeitenden Doppelwellenextruder wurde die Polyesterkomponente und das Polyphenylensulfid aufgeschmolzen und zu deren Schmelze gegebenenfalls der Kautschuk C zudosiert. Die Zylindertemperaturen wurden so gewählt, daß die in der Tabelle angegebenen Massetemperaturen eingehalten wurden. Der Schmelzestrang wurde in Wasser abgeleitet, granuliert und getrocknet. Auch hier weisen die erfindungsgemäßen Formmassen im Gegensatz zum Vergleichsversuch glatte Oberflächen auf (Tabelle 2).

Tabelle 2:

| PET | PBT | PPS (amorph) | PPS (teilkrist.) | Lösungsviskosistät | Masse temperatur | Bemerkung |
|---|---|---|---|---|---|---|
| 75 | - | 25 | - | 1,35 | 270 | homogen |
| 75 | - | - | 25 | 1,20 | 310 | homogen/spröd |
| - | 75 | 25 | - | 1,69 | 265 | homogen |
| - | 75 | - | 25 | 1,23 | 310 | homogen/spröd |

## Ansprüche

1. Polymerblends aus
   A) einem teilkristallinen, metastabil amorphen Thermoplasten A,
   B) mindestens einem zweiten Thermoplasten B und
   C) gegebenenfalls weiteren Zusatzstoffen.

2. Polymerblends enthaltend
   A 0,9 bis 99,1 Gew.-%, bevorzugt 5 bis 50 Gew.-%, eines teilkristallinen, metastabil amorphen Thermoplasten A,
   B) 99,9 bis 0,9 Gew.-%, bevorzugt 95 - 50 Gew.-%, eines weiteren Thermoplasten B und, bezogen auf das Gewicht der Summe der Komponenten A + B,
   C) 0 bis 50 Gew.-% weitere Zusatzstoffe.

3. Polymerblends nach Anspruch 1, in denen als teilkristalliner, metastabil amorpher Thermoplast A, bevorzugt ein Polyarylensulfid, besonders bevorzugt Polyphenylensulfid, eingesetzt wird.

4. Polymerblends nach Anspruch 1, in denen die Komponente C ein kautschukelastisches Pfropfpolymerisat darstellt.

5. Verwendungen von Polymerblends gemäß Anspruch 1 zur Herstellung von geformten Körpern.